# EUROPEAN PATENT SPECIFICATION

(11) **EP 1 319 849 B1**
(45) Date of publication and mention of the grant of the patent: **22.02.2006**
(21) Application number: 02251327.9
(22) Date of filing: 26.02.2002
(51) Int. Cl.: F16B 21/20, F16B 19/00, F16B 21/12

(54) **Apparatus for holding pin in pin-coupled structure**
Gerät zum Halten eines Stifts in einer durch Stifte gekoppelten Struktur
Appareil de retenue de broche dans une structure à accouplement par broche

(30) Priority: 17.12.2001 KR 2001080072; 20.12.2001 KR 2001039438
(43) Date of publication of application: 18.06.2003
(73) Proprietor: Soosan Heavy Industries Co., Ltd., Hwasung-gun, Kyungki-do (KR)
(72) Inventor: Lee, Sang Woo, Osan, Kyungki-do (KR)
(74) Representative: Powell, Timothy John

(56) References cited:
- GB-A- 851 182
- GB-A- 1 332 323
- US-A- 4 142 704
- US-A- 4 579 494
- US-A- 6 032 390

## Description

### BACKGROUND OF THE INVENTION

### Field of the Invention

The present invention relates, in general, to an apparatus for holding a coupling pin at a desired position in a pin-coupled structure, regardless of a relative movement of two or more coupled parts in the structure, and, more particularly, to a pin holding apparatus, which has two semicircular pin holding blocks with an elastic member interposed between the two pin holding blocks, and is inserted into a pin aperture with the two holding blocks radially compressed by an external force to reduce the outer diameter of the apparatus, and elastically expands in the pin aperture due to the restoring force of the compressed elastic member when the external force is removed, thus being set in an annular groove formed on the inner surface of the pin aperture and holding a pin at its desired position in the pin aperture.

### Description of the Prior Art

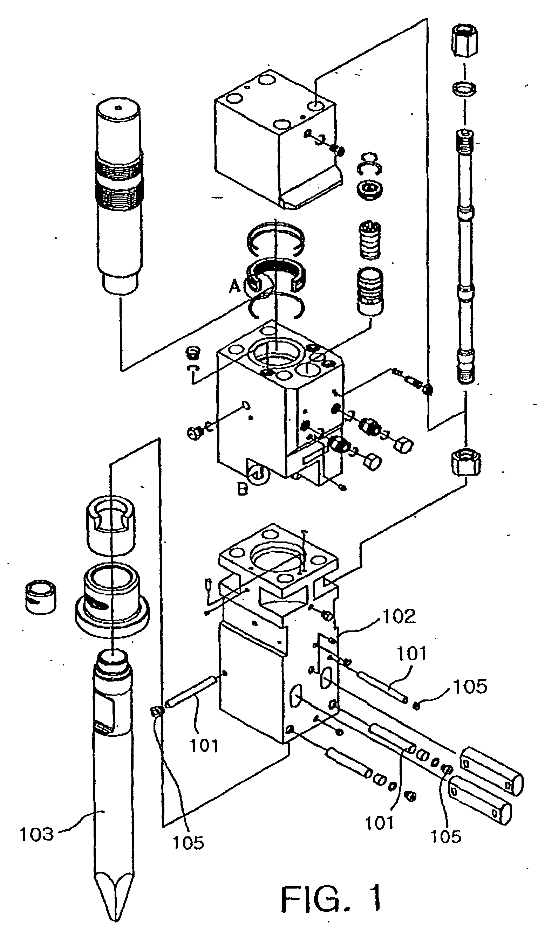

As well known to those skilled in the art, a pin-coupled structure has been typically used in a variety of machines and other structures. In order to couple two or more parts of a machine or a structure to each other using a coupling pin in the prior art, a pin aperture is formed at a desired position of each part. The parts are, thereafter, coupled together by inserting a coupling pin into the aligned pin aperture of the parts. An example of such conventional pin-coupled structures is shown in Fig. 1.

Fig. 1 shows a breaker used as an attachment of a power excavator and having a conventional pin holding apparatus. As shown in the drawing, a breaker drill 103 along with a plurality of locking members is inserted into a drill hole of a drill support block 102, and is held at a desired position in the support block 102 by means of a plurality of pins 101 and stoppers 105. During a breaking work using the breaker, the breaker drill 103 generates intensive vibrations which tend to loosen the pins 101. In an effort to hold the pins 101 in their positions regardless of such vibrations, the stoppers 105 are used. However, the stoppers 105 are also gradually loosened by such vibrations and cannot effectively hold the pins 101 in their positions for a desired lengthy period of time. In the pin holding apparatus used in this breaker, each of the stoppers 105 comprises a rubber peg driven into a pin slot after inserting a pin 101 into the pin slot, and the rubber peg is stopped using both a stop ring and a plug bolt.

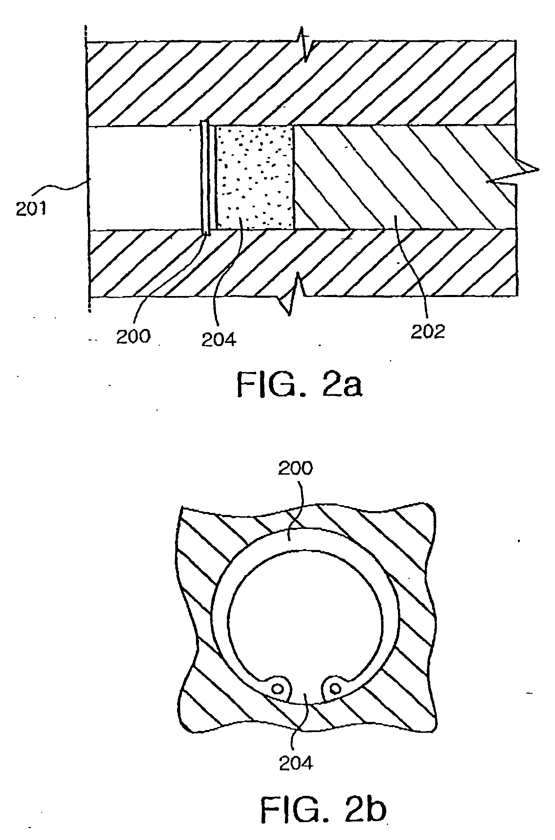

As shown in Figs. 2a and 2b showing a conventional pin holding apparatus used in such a pin-coupled structure, a snap ring 200 manufactured according to the Korean Industrial Standards, KS B 1336-85, is used as a stop ring. This snap ring 200 has a gap formed therein, thus having elasticity. That is, such a snap ring 200 is inserted into a pin aperture 201 while being compressed, and is released in the pin aperture, so the snap ring 200 elastically expands to restore its original shape, and stops a pin 202 in the pin slot 201. However, the thickness of the snap ring 200 is limited since it is very difficult to form an annular shape of the ring 200 with desired elasticity when the thickness of the ring 200 exceeds a predetermined level. Therefore, the snap ring 200 is somewhat thin, so the ring seat groove formed on the inner surface of the pin aperture 201 for seating the ring 200 therein fails to have a desired effective depth.

In order to hold the pin 202 in the pin aperture 201, the pin 202 is first inserted into the pin aperture 201. Thereafter, a rubber peg 204 is driven into the pin aperture 201 until it is positioned at the end of the pin 202. The snap ring 200 is, thereafter, set in the pin aperture 201 to stop the rubber peg 204. However, when the pin 202 is repeatedly vibrated in such a pin-coupled structure, vibration impact is repeatedly transmitted to the snap ring 200 through the rubber peg 204, thus forcing the ring 200 to be removed from its original position and fail to stop the rubber peg 204. In such a case, the pin 202 may be undesirably removed from the pin aperture 201, and disconnect the coupled parts from each other.

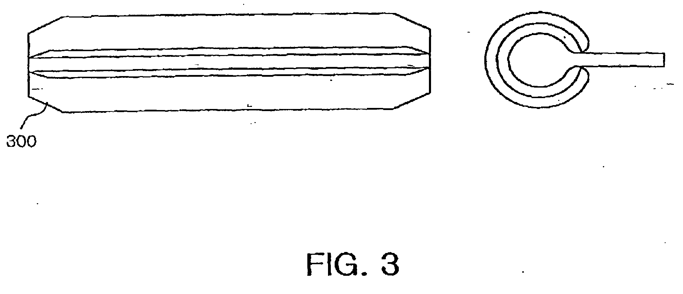

Fig. 3 shows another embodiment of conventional pin holding apparatuses. This conventional pin holding apparatus uses a spring pin 300 manufactured according to the Korean Industrial Standards, KS B 1339-85. In this pin holding apparatus, the spring pin 300 is manufactured by rolling a steel plate having elasticity allowing the pin 300 to be elastically compressed and expanded in a radial direction within a predetermined range. This spring pin 300 is forcibly fitted into a pin aperture to accomplish a pin holding effect. However, this spring pin 300 undesirably gradually loses its original elasticity when it is used in a pin-coupled structure generating intensive vibrations for a lengthy period of time. In such a case, the spring pin may be unexpectedly removed from the pin aperture, and fail to continue performing its pin holding function, thus disconnecting the coupled parts from each other.

US-A-4,579,494 discloses an elongated, flexible locking pin having one rounded and one flat end. The pin is made in two semi-cylindrical halves of differing diameter and bonded together by a rubber substance. The latter also covers the flat end of the pin and a small portion of the length of the pin adjacent to the flat end.

In US-A-6,032,390 a tooth keeper pin for locking an excavator bucket tooth to an adapter includes two identical semi-circular halves bonded together by an elastomer. The steel halves have projections near both ends, which lock the pin in place after it has been installed.

GB-A-1 332 323 discloses another pin having two pin halves joined together by a lengthwise-extending pad of an elastomeric material. The pin of GB-A-1 332 323 has an enlarged and tapering end portion. The distance between the halves is less at the ends of the pin, than in a central portion.

### SUMMARY OF THE INVENTION

An embodiment of this invention, which is defined in claim 1, provides an apparatus for holding a pin in a pin-coupled structure consisting of two or more parts each having a pin aperture, with an annular groove formed on the inner surface of the pin aperture at a position around an end of the pin aperture, and a pin set in the pin aperture to couple the parts to each other, wherein the apparatus comprises: two pin holding blocks each having a protruding portion on the external surface thereof and made of an incompressible material; and an elastic member interposed between the two blocks, whereby the apparatus is inserted into the pin aperture while being compressed in a radial direction by an external force to reduce the outer diameter thereof, and is released from the external force, so the apparatus elastically expands by a restoring force of the elastic member and the protruding portions of the two blocks are seated in the annular groove, thus holding the pin in the pin aperture without allowing the pin to be undesirably removed from the pin aperture regardless of a relative movement of the pin-coupled parts.

Preferably the apparatus includes an elastic cushion having a cross-section similar to that of the pin and covering the lower ends of the two blocks and the elastic member, whereby when the apparatus is inserted into the pin recess the elastic cushion comes into contact with an end of the pin.

Accordingly, the present invention has been made keeping in mind the above problems occurring in the prior art, and an advantage of the present invention is to provide a pin holding apparatus, which has two pin holding blocks with an elastic member interposed between the two pin holding blocks, and holds a pin at its desired position inside a pin aperture by the protruding semicircular portions of the pin holding blocks set in an annular groove formed on the inner surface of the pin slot.

Another advantage of the present invention is to provide a pin holding apparatus, which is easily set in and removed from the pin aperture.

A further advantage of the present invention is to provide a pin holding apparatus, which effectively holds the pin in the pin aperture for a desired lengthy period of time regardless of vibrations of the pin-coupled parts, thus maintaining the stable coupling of the parts, and which has an elastic cushion positioned at the junction of the pin and the pin holding apparatus, thus almost completely preventing a breakage of the pin.

### BRIEF DESCRIPTION OF THE DRAWINGS

The above and other objects, features and other advantages of the present invention will be more clearly understood from the following non-limiting detailed description taken in conjunction with the accompanying drawings, in which:
Fig. 1 is an exploded perspective view of a breaker, which is used as an attachment of a power excavator and has a conventional pin holding apparatus;
Figs. 2a and 2b are views showing a conventional pin holding apparatus using a stop ring, in which:
   Fig. 2a is a side sectional view of the pin holding apparatus; and
   Fig. 2b is a front sectional view of the pin holding apparatus;
Fig. 3 is a view showing a conventional pin holding apparatus using a spring pin;

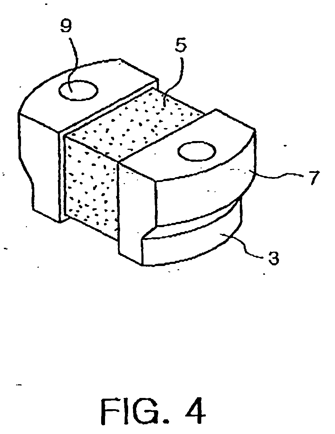

Fig. 4 is a perspective view of a pin holding apparatus in accordance with the primary embodiment of the present invention;

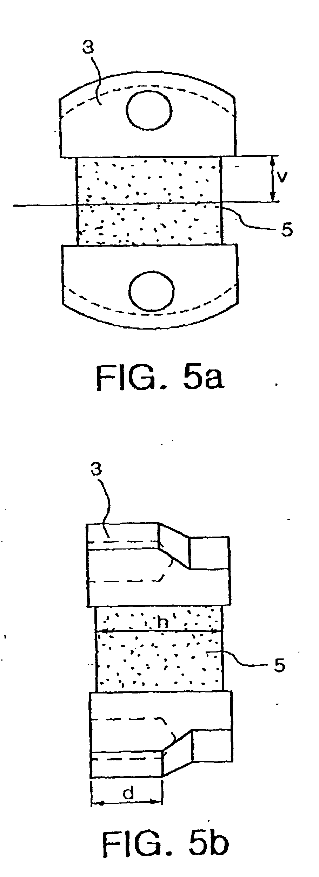

Figs. 5a and 5b are views showing the pin holding apparatus of Fig. 4, in which:
   Fig. 5a is a plan view of the pin holding apparatus; and
   Fig. 5b is a side view of the pin holding apparatus; using a spring pin;

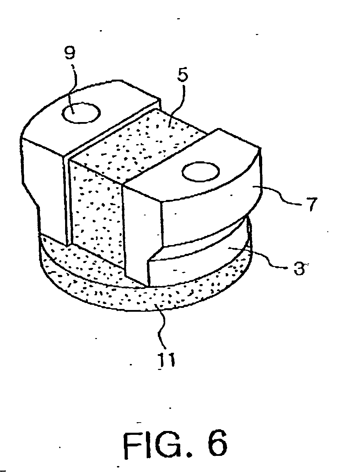

Fig. 6 is a perspective view of a pin holding apparatus in accordance with the second embodiment of the present invention; and

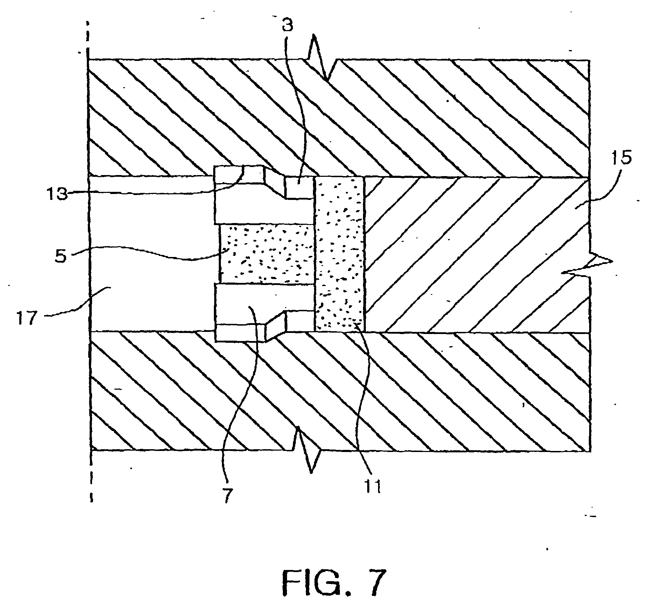

Fig. 7 is a side sectional view of the pin holding apparatus of this invention set in a pin slot for holding a pin in the pin aperture.

### DETAILED DESCRIPTION OF THE INVENTION

Reference now should be made to the drawings, in which the same reference numerals are used throughout the different drawings to designate the same or similar components.

Fig. 4 is a perspective view of a pin holding apparatus in accordance with the primary embodiment of the present invention. Figs. 5a and 5b are views showing the pin holding apparatus of Fig. 4, in which Fig. 5a is a plan view and Fig. 5b is a side view.

As shown in the drawings, the pin holding apparatus has a cylindrical profile. This apparatus has two pin holding blocks 3, each of which is made of incompressible strong material. Preferably, the blocks 3 are made of steel. Each of the two blocks 3 has an arc-shaped surface on its outside surface, and a flat surface on its inside surface. The two blocks 3 are oppositely positioned such that their flat inside surfaces face each other. Both sides of each block 3 are cut to form flat surfaces, and the two flat side surfaces of the block 3 meet the flat inside surface at right angles. Each of the two blocks 3, having such flat surfaces except for the arc-shaped outside surface, is provided with a protruding semicircular portion 7 on the arc-shaped outside surface.

The protruding semicircular portion 7 is formed along the arc-shaped outside surface of each block 3, and radially protrudes from the remaining part of the outside surface to have a predetermined protruding thickness. The protruding portion 7 may be formed at a desired portion of the outside surface of the block 3, but is preferably formed along the upper portion of the outside surface. In the preferred embodiment, the protruding portion 7 is continuously formed along the upper portion of the arc-shaped outside surface of each block 3 from one side surface to the other side surface of the block 3. The lower edge of the protruding portion 7 is integrated with the other part of the arc-shaped outside surface through an inclined junction surface, which is inclined at an angle of about 30°. Due to the inclined junction surface, it is possible to easily and smoothly insert the pin holding apparatus of this invention into a desired pin aperture.

In the present invention, it is preferable to design the width "d" of the protruding portion 7 such that the width "d" is set to 50% or less than the height of the block 3 in an effort to give convenience to a user while fitting the pin holding apparatus into a pin aperture. That is, when the width "d" of the protruding portion 7 exceeds 50% of the height of the block 3, it is difficult to compress the pin holding apparatus, thus being very inconvenient to the user while fitting the apparatus into a pin aperture.

An elastic member 5 is interposed between the two pin holding blocks 3 to support the two blocks 3. In the present invention, the elastic member 5 is preferably made of rubber as shown in the drawing, but it should be understood that the elastic member 5 may be selected among the other elastically compressible materials, such as compression springs. However, it is necessary to design the elastic member 5 such that the member 5 has a predetermined elasticity. In the case of an elastic member made of rubber, it is preferable to use rubber having a shore hardness of about 50 ~ 90, and most preferable to use synthetic rubber having a shore hardness of about 70. When the elastic member 5 is designed to have such shore hardness, a user can compress the elastic member 5 when strongly compressing the two blocks 3 using a tool, but cannot compress the elastic member 5 when manually compressing the two blocks 3 with hands or fingers. In order to integrate the parts of the pin holding apparatus of this invention, the elastic member 5 is interposed between the two blocks 3, and is bonded to the blocks 3 using a bonding agent, prior to being subjected to a pressing process using a press forming machine.

When the elastic member 5 is made of rubber as described in the preferred embodiment of this invention, the elastic member 5 is preferably designed to be slightly wider than each block 3. In such a case, the width of the rubber elastic member 5 is designed in consideration of the width of the block 3 having the protruding portion 7. That is, it is preferable to design the half width "v" of the rubber elastic member 5 such that it is set to 20 ~ 50 % of the distance from the center of the elastic member 5 to the center of the rounded outside edge of the protruding portion 7 of each block 3. In addition, the length "h" of the rubber elastic member 5 is designed such that it is slightly smaller than that of each block 3, so both side surfaces of the elastic member 5 do not protrude outside the side surfaces of the two blocks 3 when the elastic member 5 is compressed to expand in a lengthwise direction.

Each of the two pin holding blocks 3 has a cylindrical hole 9 on its upper surface for allowing a user to use a tool, such as a plier, when fitting the pin holding apparatus into a pin aperture. That is, when it is desired to fit the pin holding apparatus into a desired pin aperture, a user inserts the clamp arms of a plier into the holes 9 of the two blocks 3, and radially compresses the two blocks 3 while overcoming the restoring force of the elastic member 5 by actuating the plier, so the outer diameter of the pin holding apparatus is reduced and the user can fit the apparatus into the pin aperture. When the pin holding apparatus is set in the pin aperture such that the protruding portions 7 of the two blocks 3 are aligned with an annular groove formed on the inner surface of the pin aperture, the plier is removed from the holes 9. The two blocks 3 elastically expand by the restoring force of the compressed elastic member 5, so the protruding portions 7 of the two blocks 3 are seated in the annular groove to hold the pin at its desired position in the pin aperture.

Fig. 6 is a perspective view of a pin holding apparatus in accordance with the second embodiment of the present invention. In this second embodiment, the general shape of the pin holding apparatus remains the same as that described for the primary embodiment, but an elastic cushion 11 is attached to the end of the pin holding apparatus such that the elastic cushion 11 is positioned at the junction of the pin and the pin holding apparatus when the apparatus is set in a pin aperture to hold a pin in the pin aperture. The elastic cushion 11 is preferably made of the same material as that of the elastic member 5 interposed between the two blocks 3. More preferably, the elastic cushion 11 is cast with the elastic member 5 into a single elastic body. The elastic cushion 11 has a disc shape. The lower surface of the cushion 11 may be flattened. However, it is preferable to form the lower surface of the cushion 11 to be concave. When the elastic cushion 11 has such a concave lower surface, the outside edge of the lower surface of the cushion 11 comes into contact with the end of a pin set in a pin aperture. Therefore, the force applied from the pin to the pin holding apparatus is transmitted to the circumferential surface of the protruding portions 7 of the blocks 3, so no moment acts in the apparatus. This creates an improved operational effect of the pin holding apparatus.

The operational effect of the pin holding apparatus according to the present invention will be described herein below with reference to the accompanying drawings. Fig. 7 is a side sectional view of the pin holding apparatus according to the second embodiment of this invention set in a pin aperture for holding a pin in the pin aperture.

The pin holding apparatus of this invention is driven into a pin aperture 17 to stop a pin 15 set in the pin aperture 17, thus holding the pin 15 at a desired position inside the pin aperture 17. An annular groove 13 is formed on the inner surface of the pin aperture 17 at a predetermined position, and seats the protruding portions 7 of the apparatus therein, thus stopping the apparatus in the pin aperture 17. When fitting the pin holding apparatus into the pin aperture 17, an appropriate tool, such as a plier, is used for compressing the apparatus to reduce the outer diameter of the apparatus. When the pin holding apparatus is set in the pin aperture 17 such that the protruding portions 7 are aligned with the annular groove 13 of the pin aperture 17, the tool is removed from the holes 9. The two blocks 3 thus elastically expand by the restoring force of the compressed elastic member 5, so the protruding portions 7 of the two blocks 3 are seated in the annular groove 13 to hold the pin 15 at its desired position in the pin aperture 17.

The pin holding apparatus of this invention uses two pin holding blocks, each of which is stronger and thicker than a conventional snap ring or a conventional spring ring used as a pin holding apparatus in the prior art. The pin holding apparatus of this invention is easily and simply set in a pin aperture by inserting only the apparatus into the pin aperture, and firmly holds a pin set in the pin aperture. In the present invention, the depth of the annular groove 13 formed on the inner surface of the pin aperture 17 may be somewhat freely designed in consideration of a variety of design factors, such as the diameter of the pin aperture 17 and an expected force applied to the pin 15. Of course, it is necessary to design the dimension of the pin holding apparatus of this invention in accordance with such design factors to meet the depth of the annular groove 13.

When completely setting the pin holding apparatus in the pin aperture, the elastic cushion 11 comes into contact with the end of the pin 15, and absorbs impact applied from the pin 15, thus preventing a breakage of the pin 15.

When it is desired to remove the pin holding apparatus from the pin aperture 17 for exchanging the pin 15 for a new one or disassembling the pin-coupled parts from each other, the apparatus is compressed using a tool, the clamping arms of which are inserted into the holes 9 of the apparatus, and removed from the pin aperture 17. Therefore, it is possible for a user easily and simply to set or remove the pin holding apparatus of this invention into or from a desired pin aperture without causing damage to a pin, the pin aperture or the pin holding apparatus.

As described above, the present invention provides an apparatus for holding a pin in a pin-coupled structure. This pin holding apparatus has two pin holding blocks with an elastic member interposed between the two pin holding blocks, and holds a pin at its desired position inside a pin aperture by the protruding portions of the pin holding blocks set in an annular groove formed on the inner surface of the pin aperture.

The pin holding apparatus of this invention firmly holds a pin in a pin aperture for a desired lengthy period of time since the apparatus is not abraded or undesirably loosened. This pin holding apparatus is also easily set in or removed from the pin aperture.

This pin holding apparatus firmly holds a pin in a pin aperture for a desired lengthy period of time regardless of a relative movement of pin-coupled parts, and uses an elastic cushion at the junction of the pin and the apparatus, thus preventing a breakage of the pin.

Although a preferred embodiment of the present invention has been described for illustrative purposes, those skilled in the art will appreciate that various modifications, additions and substitutions are possible, without departing from the scope of the invention.

## Claims

1. An apparatus for holding a pin (15) in a pin-coupled structure consisting of two or more parts each having a pin aperture (17), with an annular groove (13) formed on an inner surface of the pin aperture (17) at a position around an end of the pin aperture (17), and a pin (15) set in said pin aperture (17) to couple said parts to each other, wherein the apparatus comprises:
two pin holding blocks (3) each having a protruding portion (7) on an external surface thereof and made of an incompressible material; and
an elastic member (5) interposed between the two blocks (3),
whereby the apparatus is insertable into the pin aperture (17) while being compressed in a radial direction by an external force to reduce an outer diameter thereof, and is releasable from the external force, so the apparatus elastically expands by a restoring force of the elastic member (5), whereby the protruding portions (7) of the two blocks (3) are seatable in the annular groove (13), thus permitting holding of the pin (15) in the pin aperture (17) without allowing the pin (15) to be undesirably removed from the pin aperture (17) regardless of a relative movement of the pin-coupled parts.

2. The apparatus according to Claim 1, wherein said elastic member (5) is made or rubber.

3. The apparatus according to Claim 1, wherein each of said two blocks (3) is made of steel, and the protruding portion (7) is formed on an upper portion of each of the blocks, with a lower edge of the protruding portion integrated with a remaining part of the block (3) through an inclined junction surface.

4. The apparatus according to Claim 3, wherein said junction surface is inclined at an angle of 30°.

5. The apparatus according to Claim 3, wherein each of the two blocks (3) has a cylindrical hole (9) on an upper surface thereof for allowing a user to compress the apparatus in the radial direction using a tool.

6. The apparatus according to Claim 3, wherein a half width "v" (as defined herein) of said elastic member (5) in a direction toward each of the blocks (3) is set to 20 ~ 50 % of a distance from a center of said elastic member (5) to an outside edge of the protruding portion (7) of each of the blocks (3).

7. The apparatus according to Claim 3, wherein a length "h" of the elastic member (5) is smaller than that of each of the two blocks (3).

8. An apparatus according to any preceding claim including an elastic cushion (11) having a cross-section similar to that of the pin (15) and covering lower ends of said two blocks (3) and said elastic member (5),
whereby when the apparatus is inserted into the pin aperture (17) the elastic cushion (11) comes into contact with an end of the pin (15).

9. The apparatus according to Claim 8, wherein said elastic cushion (11) is made of rubber.

10. The apparatus according to Claim 8, wherein said elastic cushion (11) is formed to be concave on a lower surface thereof, thus allowing a force applied from the pin (15) to be concentrated to an outside edge of said concave lower surface.

11. The apparatus according to Claim 8, wherein said elastic member (5) and said elastic cushion (11) are cast into a single elastic body, and the two blocks (3) are bonded to the single elastic body prior to being compressed together to be integrated with the elastic body into a single body.

## Revendications

1. Appareil pour retenir une broche (15) dans une structure à accouplement par broche constituée de deux ou plus de deux parties ayant chacune une ouverture pour broche (17), une gorge annulaire (13) étant formée sur une surface intérieure de l'ouverture pour broche (17) au niveau d'une position située autour d'une extrémité de l'ouverture pour broche (17), et un ensemble formant broche (15) situé dans ladite ouverture pour broche (17) pour accoupler lesdites parties l'une à l'autre, dans lequel l'appareil comporte :
deux blocs de retenue de broche (3), chacun ayant une partie en saillie (7) sur sa surface extérieure et étant constitué d'un matériau incompressible ; et
un élément élastique (5) interposé entre les deux blocs (3),
de sorte que l'appareil peut être inséré dans l'ouverture pour broche (17) tout en étant comprimé dans une direction radiale par une force extérieure pour réduire son diamètre extérieur, et peut être libéré de la force extérieure, de sorte que l'appareil se dilate élastiquement par une force de restauration de l'élément élastique (5),
de sorte que les parties en saillie (7) des deux blocs (3) sont en appui dans la gorge annulaire (13), permettant ainsi de retenir la broche (15) dans l'ouverture pour broche (17) sans permettre que la broche (15) ne soit enlevée de manière indésirable à partir de l'ouverture pour broche (17), indépendamment d'un mouvement relatif des parties à accouplement par broche.

2. Appareil selon la revendication 1, dans lequel ledit élément élastique (5) est constitué de caoutchouc.

3. Appareil selon la revendication 1, dans lequel chacun desdits deux blocs (3) est constitué d'acier, et la partie en saillie (7) est formée sur une partie supérieure de chacun des blocs, un bord inférieur de la partie en saillie étant intégré à une partie restante du bloc (3) à travers une surface de liaison inclinée.

4. Appareil selon la revendication 3, dans lequel ladite surface de liaison est inclinée selon un angle de 30°.

5. Appareil selon la revendication 3, dans lequel chacun des deux blocs (3) a un trou cylindrique (9) sur sa surface supérieure pour permettre à un utilisateur de comprimer l'appareil dans la direction radiale en utilisant un outil.

6. Appareil selon la revendication 3, dans lequel une demi-largeur "v" dudit élément élastique (5) dans une direction dirigée vers chacun des blocs (3) est fixée entre 20 et 50 % de la distance allant du centre dudit élément élastique (5) jusqu'à un bord extérieur de la partie en saillie (7) de chacun des blocs (3).

7. Appareil selon la revendication 3, dans lequel la longueur "h" de l'élément élastique (5) est plus petite que celle de chacun des deux blocs (3).

8. Appareil selon l'une quelconque des revendications précédentes, incluant un coussin élastique (11) ayant une section transversale similaire à celle de la broche (15) et recouvrant les extrémités inférieures desdits deux blocs (3) et dudit élément élastique (5),
de sorte que lorsque l'appareil est inséré dans l'ouverture pour broche (17), le coussin élastique (11) vient en contact avec une extrémité de la broche (15).

9. Appareil selon la revendication 8, dans lequel ledit coussin élastique (11) est constitué de caoutchouc.

10. Appareil selon la revendication 8, dans lequel ledit coussin élastique (11) est formé pour être concave sur sa surface inférieure, permettant ainsi qu'une force appliquée à partir de la broche (15) soit concentrée sur le bord extérieur de ladite surface inférieure concave.

11. Appareil selon la revendication 8, dans lequel ledit élément élastique (5) et ledit coussin élastique (11) sont coulés en un seul corps élastique et les deux blocs (3) sont fixés sur le seul corps élastique avant d'être comprimés ensemble pour être intégrés avec le corps élastique en un corps unique.

## Patentansprüche

1. Vorrichtung zum Halten eines Bolzens (15) in einer bolzengekuppelten Struktur, die aus zwei oder mehr Teilen besteht, von denen jeder eine Bolzenöffnung (17) mit einer ringförmigen Rille (13), die auf einer Innenfläche der Bolzenöffnung (17) in einer Position um ein Ende der Bolzenöffnung (17) herum angeordnet ist, und einen Bolzen (15) in der Bolzenöffnung (17) aufweist, um die Teile miteinander zu verkuppeln, wobei die Vorrichtung Folgendes umfasst:
zwei Bolzen haltende Blöcke (3), von denen jeder einen vorstehenden Abschnitt (7) auf einer Außenfläche davon aufweist und aus einem nicht komprimierbaren Material besteht; und
ein elastisches Element (5), das zwischen den zwei Blöcken (3) angeordnet ist,
wobei die Vorrichtung in die Bolzenöffnung (17) eingefügt werden kann, während sie in einer radialen Richtung durch eine externe Kraft komprimiert wird, um einen Außendurchmesser davon zu reduzieren und aus der externen Kraft freigegeben werden kann, so dass sich die Vorrichtung elastisch durch eine Rückstellkraft des elastischen Elementes (5) ausdehnt, wobei die vorstehenden Abschnitte (7) der zwei Blöcke (3) in der ringförmigen Rille (13) angeordnet werden können, so dass ein Halten des Bolzens (15) in der Bolzenöffnung (17) ermöglicht wird, ohne dem Bolzen (15) zu ermöglichen, in unerwünschter Weise aus der Bolzenöffnung (17) entfernt zu werden, ungeachtet einer relativen Bewegung der bolzengekuppelten Teile.

2. Vorrichtung nach Anspruch 1, wobei das elastische Element (5) aus Gummi hergestellt ist.

3. Vorrichtung nach Anspruch 1, wobei jeder der zwei Blöcke (3) aus Stahl hergestellt und der vorstehende Abschnitt (7) auf einem oberen Abschnitt von jedem der Blöcke ausgebildet ist, wobei eine Unterkante des vorstehenden Abschnitts in einem restlichen Teil des Blocks (3) durch eine geneigte Verbindungsfläche integriert ist.

4. Vorrichtung nach Anspruch 3, wobei die Verbindungsfläche in einem Winkel von 30 ° geneigt ist.

5. Vorrichtung nach Anspruch 3, wobei jeder der zwei Blöcke (3) eine zylinderförmige Öffnung (9) auf einer Oberfläche davon aufweist, um einem Benutzer zu ermöglichen, die Vorrichtung in der radialen Richtung durch Verwendung eines Werkzeuges zu komprimieren.

6. Vorrichtung nach Anspruch 3, wobei eine Halbwertsbreite "v" (so wie hierin definiert) des elastischen Elements (5) in einer Richtung zu jedem der Blöcke (3) hin auf 20 ~ 50 % eines Abstands von einem Zentrum des elastischen Elements (5) zu einer Außenkante des vorstehenden Abschnitts (7) von jedem der Blöcke (3) eingestellt ist.

7. Vorrichtung nach Anspruch 3, wobei eine Länge "h" des elastischen Elements (5) kleiner als jene von jedem der zwei Blöcke (3) ist.

8. Vorrichtung nach einem der vorhergehenden Ansprüche, die ein elastisches Kissen (11) enthält, das einen Querschnitt ähnlich jenem des Bolzens (15) aufweist und untere Enden der zwei Blöcke (3) und des elastischen Elements (5) bedeckt, wobei - wenn die Vorrichtung in die Bolzenöffnung (17) eingefügt ist - das elastische Kissen (11) mit einem Ende des Bolzens (15) in Kontakt kommt.

9. Vorrichtung nach Anspruch 8, wobei das elastische Kissen (11) aus Gummi hergestellt ist.

10. Vorrichtung nach Anspruch 8, wobei das elastische Kissen (11) konkav auf einer Unterfläche davon ausgebildet ist, wodurch das Konzentrieren einer von dem Bolzen (15) ausgeübten Kraft auf eine Außenkante der konkaven Unterfläche ermöglicht wird.

11. Vorrichtung nach Anspruch 8, wobei das elastische Element (5) und das elastische Kissen (11) in einen einzelnen elastischen Körper gegossen sind und die zwei Blöcke (3) vor dem Zusammenkomprimieren mit dem einzelnen elastischen Körper verbunden werden, um mit dem.elastischen Körper zu einem einzelnen Körper integriert zu werden.
